# EUROPÄISCHE PATENTSCHRIFT

(11) **EP 3 135 601 B1**
(45) Veröffentlichungstag und Bekanntmachung des Hinweises auf die Patenterteilung: **23.10.2019**
(21) Anmeldenummer: 16185239.7
(22) Anmeldetag: 23.08.2016
(51) Int. Cl.: B65D 71/00, B60P 7/08

(54) **ANORDNUNG ZUM AUTOMATISCHEN SICHERN EINER SENDUNG**
ASSEMBLY FOR AUTOMATICALLY SECURING A TRANSMISSION
SYSTEME DE SECURISATION AUTOMATIQUE D'UN ENVOI

(30) Priorität: 24.08.2015 DE 102015113987
(43) Veröffentlichungstag der Anmeldung: 01.03.2017
(73) Patentinhaber: Deutsche Post AG, 53113 Bonn (DE)
(72) Erfinder: Wendt, Peter, 04828 Bennewitz (DE); Veasey, Mark, 53343 Pech-Wachtberg, Bonn (DE); Steinert, Frank, 53797 Lohmar (DE); Renoth, Mike, 06217 Merseburg (DE); Kleinlein, Ingo, 27211 Bassum (DE)
(74) Vertreter: Michalski Hüttermann & Partner Patentanwälte mbB

(56) Entgegenhaltungen:
- GB-A- 734 002
- GB-A- 1 270 337
- GB-A- 2 363 599
- GB-A- 2 402 380

## Beschreibung

Die Erfindung betrifft eine Anordnung zum automatischen Sichern wenigstens einer Sendung auf einer Transportschale, aufweisend die Sendung und die Transportschale, auf der die Sendung abstellbar ist, eine Fixiereinrichtung ausgestaltet zum Sichern der Sendung an der Transportschale. Zudem betrifft die Erfindung ein Verfahren zum automatischen Sichern einer Sendung, mit einer Fixiereinrichtung ausgestaltet zum Sichern der Sendung an einer Transportschale, auf der die Sendung abstellbar ist.

Als Paketzentrum, auch Versandzentrum, Hauptumschlagbasis, abgekürzt HUB, oder Frachtzentrum genannt und nachfolgend nur Paketzentrum oder Versandzentrum genannt, wird im Allgemeinen ein von einem Logistik-, Post-, Versand- Transportunternehmen und/oder Flughafen genutztes Zentrum zum Umschlagen, Lagern, Sortieren und/oder Versenden von Sendungen verstanden. Als Sendungen werden im Rahmen der Erfindung portable Güter jeglicher Art bezeichnet, beispielsweise Briefe, Pakete, Frachtgüter, Frachtsendung, Frachteinheit, Packstück oder dergleichen. Oftmals ist ein Paketzentrum so aufgebaut, dass zunächst in einem Anlieferbereich Sendungen beispielsweise per LKW oder per Bahn angeliefert werden können. Zum einfacheren Handling sind vielfach eine Mehrzahl Sendungen auf einer Palette, beispielsweise einer Europoolpalette, nebeneinander und/oder übereinander gestapelt abgestellt.

Mit einem Gabelstapler oder dergleichen kann die Palette in dem Anlieferbereich aus dem LKW entladen und innerhalb des Versandzentrums auf einem handbetätigbaren oder durch eine Zugmaschine bewegbaren Transportwagen abgesetzt werden. Mittels des Transportwagens lässt sich die Palette hin zu einer Sortieranlage zum Sortieren der Sendungen beispielsweise anhand einer jeweiligen Zielregion bewegen. Alternativ kann die Paletten in einem oftmals als Hochregallager ausgeführten Zwischenlager gelagert werden, um zu einem späteren Zeitpunkt das Sortieren der Sendungen vorzunehmen. Aufgrund der räumlich immer größer werdenden Versandzentren sind Sortieranlagen oder Hochregallager nicht selten einige hundert Meter von dem Anlieferbereich entfernt angeordnet.

Ein derartiger Transport einer Palette innerhalb des Versandzentrums bedarf in der Regel eines Bedieners, entweder für den handbetätigbaren Transportwagen oder für die Zugmaschine. Derart ist der Transport zwischen LKW und Sortieranlage bzw. Zwischenlager einerseits aufwändig und andererseits kostenintensiv. Zudem sind die auf der Palette vorgesehenen Sendungen vielfach nur unzureichend oder überhaupt nicht gegen Verrutschen und Verlieren gesichert. Insofern kommt es nicht selten vor, dass auf der einige hundert Meter langen Transportstrecke Sendungen von der Palette herunterfallen. Die heruntergefallenen Sendungen sind vielfach beschädigt und erreichen ihren Adressaten verspätet oder überhaupt nicht, was einen kostenintensiver Ersatz der Sendungen nach sich zieht oder bei ausgelaufenen Flüssigkeiten sogar zeit- und kostenintensive Feuerwehreinsätze bedingt.

GB 734,002 A beschreibt eine Ladeplattform für den Transport von Gütern.

Ausgehend von dieser Situation ist es eine Aufgabe der Erfindung, eine Anordnung und ein Verfahren anzugeben, mittels derer eine Sendung beispielsweise in einem Versandzentrum in besonders verlässlicher Weise und vorzugsweise automatisiert nach einem Entladen einer weiteren Verarbeitung beispielsweise in einer Sortieranlage zugeführt werden kann. Eine weitere Aufgabe der Erfindung ist, die Sendung während eines Transports innerhalb des Versandzentrums in automatisierter Weise gegen Beschädigung oder Herunterfallen zu sichern.

Die Aufgabe der Erfindung wird durch die Merkmale der unabhängigen Ansprüche 1, 14 gelöst. Vorteilhafte Ausgestaltungen sind in den abhängigen Ansprüchen angegeben.

Ein wesentlicher Aspekt der Erfindung ist somit, dass durch das Anheben der Sendung bzw. der Transportschale aus der Beladungsposition die Sendung automatisch gegen Herunterfallen von der Transportschale bzw. der Palette gesichert wird. Andererseits wird die Sicherung der Sendung wiederum automatisch durch Absenken in die Beladungsposition aufgehoben, so dass die Sendung bzw. die Palette mit darauf angeordneter Sendung aus der Transportschale entnommen werden kann. Die vorgeschlagene Anordnung lässt sich beispielsweise in einem Versand-, Verteil-, Paket-, Frachtzentrum, in einer Hauptumschlagbasis, abgekürzt HUB, an einem Flughafen und/oder in einem Hochregal- oder Logistiklager verwenden. Die Anordnung ermöglicht, dass die Sendung während einer Beförderung in dem Paketzentrum eine automatische Sicherung gegen Herunterfallen von der Transportschale bzw. der Palette und damit gegen Beschädigung oder Verlust erfährt. Grundsätzlich lässt sich die Anordnung für palettisierte und unpalettisierte Sendungen verwenden. Sofern im Folgenden von auf der Palette angeordneter Sendung gesprochen wird, ist die beschriebene Ausgestaltung nicht auf ein zwingendes Vorhandensein der Palette beschränkt. Die Anordnung kann ebenso ohne Palette betrieben werden, beispielsweise wenn die Sendung direkt auf der Transportschale abgestellt ist.

Exemplarisch lässt sich die vorgeschlagenen Anordnung wie folgend anwenden: Ein LKW liefert eine Mehrzahl von einem Logistikdienstleister, von Packstationen, Paketboxen und/oder direkt bei Kunden abgeholter Sendungen an ein Paketzentrum, in welchem die Anordnung installiert ist. Zunächst werden die Sendungen in einem Anlieferbereich manuell durch einen Bediener aus dem LKW entladen. Sofern die Sendungen bereits auf einer Palette, beispielsweise einer Europalette, vorgesehen sind, kann die Palette beispielsweise mit einem Gabelstapler von dem LKW entladen werden. Sofern die Sendungen noch nicht auf einer Palette angeordnet sind, lassen sich die Sendungen beispielsweise mit Hilfe eines bis in den LKW hineinragenden Transportbandes manuell entladen und auf einer Palette ablegen. Ebenso lassen sich Sendungen beispielsweis von einer Luftfrachtpalette und/oder aus einem Luftfrachtcontainer, auch Unit Load Device genannt bzw. abgekürzt ULD, in einem HUB entladen, um die Sendungen nach Entnahme mittels eines Gabelstaplers direkt auf der Transportschale abzulegen bzw. zu positionieren. Die mit den Sendungen beladene Palette wird mittels des Gabelstaplers auf der in der Beladungsposition befindlichen Transportschale abgestellt, worauf die Anordnung die Transportschale bzw. die Sendungen anhebt.

Bedingt durch das Anheben kommt die Fixiereinrichtung auf den Sendungen zu liegen und sichert derart die Sendungen gegen Herunterfallen von der Palette. Sofern nun die Transportschale mit der darauf angeordneten Palette beispielsweise mittels eines Förderbands oder dergleichen innerhalb des Paketzentrums zu einer von dem Anlieferbereich räumlich entfernten Sortiereinrichtung bewegt wird, können von beispielsweise in Kurvenfahrten auftretenden Beschleunigungskräften die Sendungen nicht von der Palette bzw. der Transportschale herunterfallen. An der Sortiereinrichtung erfolgt das Absenken der Transportschale, wodurch die durch die Fixiereinrichtung bewirkte Sicherung der Sendung aufgehoben wird und die Palette, beispielsweise wiederum mit einem Gabelstapler, aus der Transportschale entnommen und der Sortiereinrichtung oder dergleichen zugeführt werden kann. Im Ergebnis wird durch die vorgeschlagene Anordnung sichergestellt, dass bei einem Transport der Palette bzw. der Transportschale mit darauf angeordneter Sendung die Sendung während des Transports, beispielsweise über eine Distanz von mehreren hundert Metern, nicht herunterfallen und damit nicht beschädigt oder verloren gehen kann.

Bevorzugt liegt die Transportschale in der Beladungsposition berührend auf einem Boden auf, beispielsweise auf dem Boden des Paketzentrums. Ebenso kann die Anordnung eine Bodenplatte, eine Plattform, ein Podest oder dergleichen aufweisen, auf der die Transportschale in der Beladungsposition zu liegen kommt. Beim Anheben der Transportschale aus der Beladungsposition verbleibt die Fixiereinrichtung bevorzugt zunächst in ihrer horizontalen Halteposition relativ beabstandet zu der Beladungsposition, bis dass durch das weitere Anheben der Transportschale die Sendung die Fixiereinrichtung berührt. Vorzugsweise ab diesem Zeitpunkt oder kurz danach verlässt die Fixiereinrichtung ihre vormalige Halteposition, um beim weiteren Anheben in ihrer Position relativ zur Transportschale verbleibend zusammen mit der Transportschale weiter angehoben und/oder in horizontaler Richtung in dem Paketzentrum bewegt zu werden. Durch das Anheben der Transportschale aus der Beladungsposition kommt die Fixiereinrichtung bevorzugt berührend an der Sendung in einer Fixierposition zu liegen, um die Sendung lage- und/oder positionssicher an der Palette bzw. der Transportschale zu fixieren. Die Anordnung bzw. die Transportschale ist bevorzugt so ausgestaltet, dass, wenn die Fixiereinrichtung auf der Sendung anliegt, die Fixierposition solange beibehalten wird, bis dass die Transportschale mittels der Anordnung in die Beladungsposition abgesenkt ist. Als Sendung werden im Rahmen der Erfindung grundsätzlich beliebige, auf einer Palette transportierbare Frachtgüter verstanden, beispielsweise Pakete, Briefe, Kisten oder sonstige transportable Güter.

Nach der Erfindung ist die Fixiereinrichtung an der Transportschale an einem Rand derselben angeordnet, wobei zwischen der Fixiereinrichtung und der Transportschale eine Teleskopstange und/oder ein Seil vorgesehen ist. In der Beladungsposition ist die Teleskopstange bevorzugt vollständig ausgezogen, während durch das Anheben der Transportschale die Teleskopstange eingezogen wird. Für den Fall, dass keine Sendung bzw. Palette auf der Transportschale abgestellt ist, wird die Teleskopstange durch Anheben der Transportschale vorzugsweise vollständig eingezogen. Nach einer weiter bevorzugten Ausgestaltung erstreckt sich die Fixiereinrichtung in der Beladungsposition in einer Ebene parallel und beabstandet zur Transportschale, insbesondere zur flächigen Erstreckung der Transportschale. In einer noch weiter bevorzugten Ausgestaltung ist die Fixiereinrichtung als Seil, als Gummiseil, als Netz, als Gitter und/oder als Plane ausgebildet. Zusätzlich oder alternativ korrespondieren die Fixiereinrichtung und die Transportschale in der Größe ihrer Grundflächen vorzugsweise zueinander, weisen also bevorzugt eine gleich oder annähernd gleich große Grundfläche auf.

Die Grundflächen erstrecken sich, jedenfalls in der Beladungsposition, jeweils bevorzugt in horizontaler Richtung. Das Netz kann beispielsweise als engmaschiges Polyesternetz ausgebildet sein, welches sich durch Anheben der Transportschale über die Sendungen legt und derart die Sendungen gegen Herunterfallen sichert. Die zwischen der Fixiereinrichtung und der Transportschale vorgesehene Teleskopstange und/oder eines Seils können mit einer Feder bzw. einem Gummi derart versehen sein, dass nach dem Anheben der Transportschale die Federkraft bzw. die Gummikraft die Fixiereinrichtung in Richtung Transportschale streben lässt. Derart unterstützt die Federkraft bzw. Gummikraft die automatische Fixierung der Sendung an der Transportschale. Besonders bevorzugt ist die Feder innerhalb der Teleskopstange derart angeordnet, dass die Teleskopstange in die eingezogene Position strebt und derart die Sendung in der Fixierposition fortlaufend sichert.

Nach einer besonders bevorzugten Ausgestaltung weisen die Transportschale und die Fixiereinrichtung jeweils eine rechteckartige und zueinander korrespondierende Grundfläche auf, wobei an jeder Ecke eine Teleskopstange vorgesehen ist, die sich jeweils senkrecht zu den Grundflächen, insbesondere in der Beladungsposition, und zwischen der Transportschale und der Fixiereinrichtung erstreckt. Nach einer weiteren bevorzugten Ausgestaltung ist zwischen der Fixiereinrichtung und der Transportschale ein Seil vorgesehen, welches an der Transportschale hin zu der Unterseite der Transportschale umgelenkt ist und mit einem an der Unterseite angeordneten Federmittel und/oder Gummiseil zum Kontrahieren des Seils beim Anheben der Transportschale verbunden ist. Im Falle des Seils ist ebenso vorteilig, wenn die Transportschale und die Fixiereinrichtung jeweils eine rechteckartige und zueinander korrespondierende Grundfläche aufweisen und an jeder Ecke ein Seil vorgesehen ist. Vorgenannte Ausgestaltungen haben sich als einerseits besonders einfach herstellbar und andererseits im täglichen Betrieb als besonders zuverlässig erwiesen, um durch Anheben der Transportschale aus der Beladungsposition die Sendung automatisch zu sichern.

Wenn keine Sendung und/oder keine Palette auf der Transportschale abgestellt ist, durch Anheben der Transportschale aus der Beladungsposition die Fixiereinrichtung auf der Transportschale insbesondere berührend zu liegen kommt. Derart lässt sich eine nicht beladene Transportschale in besonders platzsparender Weise beispielsweise durch Stapeln auf einer anderen Transportschale lagern.

Zur Ausgestaltung der Transportschale existieren grundsätzlich verschiedene Möglichkeiten. In besonders vorteilhafter Weise ist die Transportschale als Bodenwanne, als Ablage, als Transportbehälter, als Ablagekasten, als Transportplattform, als Tray oder als Tablett mit einem teilweise umlaufenden Rand ausgebildet, wobei vorzugsweise an dem Rand zwei Aussparungen für Gabelzinken vorgesehen sind. Durch den umlaufenden Rand wird ein Herunterfallen der Palette von der Transportschale verhindert. Durch die zwei Aussparungen für Gabelzinken ist eine besonders einfache Beladung der Transportschale mit einem Gabelstapler möglich. Beispielsweise lässt sich die Palette durch einen Gabelstapler über den Rand herüber in den Zwischenraum zwischen Transportschale und Fixiereinrichtung einführen und aufgrund der Aussparungen für die Gabelzinken auf der Transportschale absetzen. Nachdem die Gabelzinken aus der Palette herausgezogen sind, kann die Transportschale durch die Anordnung angehoben werden.

Für die Ausgestaltung der Palette als Ladehilfsmittel existieren ebenso verschiedene Möglichkeiten. Besonders bevorzugt ist die Palette als Europoolpalette, als Industriepalette, als Großpalette oder als Gitterbox ausgestaltet und/oder weist die Transportschale ein zu der Grundfläche der Palette korrespondierendes oder überragendes Innenmaß auf. Das Innenmaß der Transportschale beträgt beispielsweise Im x 2m und überragt derart eine beispielsweise eine Grundfläche von 0,8m x 1,2m einer Palette. In der Beladungsposition kann der Abstand zwischen der Fixiereinrichtung und der Transportschale grundsätzlich beliebig sein. Im Hinblick auf oftmals transportierte Sendungen hat sich jedoch als besonders vorteilig erwiesen, wenn der Abstand in der Beladungsposition 0,8m, Im oder 1,5m beträgt. Sofern bei einem Abstand von 1,5m eine Palette mit darauf angeordneten Sendungen auf der Transportschale abgesetzt wird, die einschließlich der Sendungen eine Höhe von 1,2m aufweist, dann verringert sich beim Anheben der Transportschale der Abstand zwischen den Sendungen und der Fixiereinrichtung von 0,3m in der Halteposition zunächst auf 0m in der Fixierposition.

Nach der Erfindung ist ein Auflager vorgesehen, welches, wenn die Transportschale in der Beladungsposition ist, vertikal beabstandet zur Transportschale derart angeordnet ist, dass beim Absenken der Transportschale in Richtung Beladungsposition zunächst die Fixiereinrichtung auf dem Auflager derart zu liegen kommt, dass beim weiteren, darüber hinausgehenden Absenken die Fixiereinrichtung in der durch das Auflager vorgegebenen, vertikal beabstandeten Position, der Halteposition, verbleibt. Korrespondierend zum Auflager ist bevorzugt an der Fixiereinrichtung eine Auskragung, ein Vorsprung oder dergleichen vorgesehen, welche beim Absenken insbesondere formschlüssig auf dem Auflager zu liegen kommt.

Sofern der Abstand zwischen Fixiereinrichtung und Transportschale in der Beladungsposition beispielsweise Im beträgt, kann das Auflager ebenso in einem Abstand von Im zur Transportschale in der Beladungsposition angeordnet sein. Besonders bevorzugt sind an der Anordnung bei einer rechteckartigen Ausgestaltung der Transportschale korrespondierend zu jeder Ecke der Transportschale ein Auflager und bei entsprechender Ausgestaltung an der Fixiereinrichtung auch vier Auskragungen vorgesehen. Die Ausgestaltung mit einem derartigen Auflager hat sich als besonders vorteilig erwiesen, da dadurch beim Absenken der Transportschale zunächst die Fixiereinrichtung in der Halteposition an einem weiteren Absenken gehindert wird, während die Transportschale bis hin zur Beladungsposition, den Abstand zwischen Fixiereinrichtung und Transportschale vergrößernd, weiter absenkbar ist.

Nach der Erfindung weist die Fixiereinrichtung einen umlaufenden Rahmen auf, welcher beim Absenken vorzugsweise in der Halteposition auf dem Auflager zu liegen kommt. Der umlaufende Rahmen kann beispielsweise aus einem Metallprofil ausgestaltet sein, an welchem das Netz zum Umhüllen und derartigem Sichern der Sendungen befestigt ist. Im Falle vorgenannter Auskragungen können diese in vorteilhafter Weise einstückig mit dem Rahmen ausgestaltet sein.

Wie anfangs beschrieben, erfolgt die Beladung der Transportschale mit der Sendung bzw. der Palette beispielsweise mit einem durch einen Bediener betätigbaren Gabelstapler oder rein manuell. Damit der Bediener nach Herausziehen der Gabelzinken aus der Palette bzw. der Transportschale nicht manuell das Anheben der Transportschale veranlassen muss, beispielsweise durch Betätigen eines Schalters, ist nach einer weiteren Ausgestaltung vorgesehen, dass nach Abstellen der Sendung und/oder der Palette auf der Transportschale die Transportschale automatisch angehoben wird. Bevorzugt erfolgt das automatische Anheben jedoch erst dann, wenn die Gabelzinken aus der Palette bzw. der Transportschale vollständig herausgezogen sind. Beispielsweise kann eine Lichtschranke, ein Gewichtssensor oder dergleichen vorgesehen sein, welcher die Beladung der Transportschale mit der Palette detektiert und dann, gegebenenfalls zeitverzögert, das Anheben der Transportschale auslöst. Ebenso kann eine Fernbedienung zum Freigeben für das Anheben vorgesehen sein, die beispielsweise ein Bediener bei sich trägt. Die Fernbedienung steht vorzugsweise in Kommunikationsverbindung mit der Anlage und kann als Applikation für ein Smartphone ausgeführt sein.

Nach einer noch weiter bevorzugten Ausgestaltung ist die Anordnung als Lift, Hebebühne und/oder Transportbahn ausgeführt. Beispielsweise ist denkbar, dass nach dem Anheben zunächst in vertikaler Richtung eine Bewegung der Transportschale mit der Palette und der darauf gesicherten Sendung, beispielsweise auf der Transportbahn oder einem Transportband, innerhalb des Paketzentrums in horizontaler Richtung bis hin zu einem vom Anlieferbereich räumlich entfernten Sortierbereich erfolgt. An dem Sortierbereich kann die Transportschale zum Entladen und weiteren Verarbeiten der Sendungen abgesenkt werden. Insofern ist die Anordnung nicht nur auf einen einzigen Lift beschränkt, sondern kann als Kombination mehrerer Anordnungen mit jeweiligen Einrichtungen zum Anheben und Absenken der Transportschalen und horizontalem Verschieben derselben zwischen den jeweiligen Liften verstanden werden.

Durch das vorgeschlagene Verfahren wird gewährleistet, dass durch Anheben der Transportschale aus der Beladungsposition die Sendung automatisch gegen Herunterfallen von Palette gesichert wird, so dass die Sendung bei einem weiteren Transport, beispielsweise in horizontaler Richtung innerhalb eines Paketzentrums, nicht beschädigt und/oder gegen Verlust gesichert ist. Vorzugsweise erfolgt das Abstellen der Palette auf der Transportschale mittels eines Gabelstaplers oder dergleichen, wobei ebenso ein manuell betätigbarer Hubwagen verwendbar ist.

Weitere Ausgestaltungen und Vorteile des Verfahrens ergeben sich für den Fachmann in Analogie zu der zuvor beschriebenen Anordnung.

Nachfolgend wird die Erfindung unter Bezugnahme auf die anliegenden Zeichnungen im Detail weiter erläutert.

Es zeigen:
- Fig. 1: zeigt eine Transportschale mit einer Palette und darauf angeordneter Sendung nach einem bevorzugten Ausführungsbeispiel der Erfindung in einer schematisch-perspektivischen Ansicht,
- Fig. 2: zeigt auf der linken Seite eine Anordnung mit der Transportschale gemäß Fig. 1 in einer Beladungsposition und auf der rechten Seite die Anordnung mit der Transportschale gemäß Fig. 1 nach Anheben der Transportschale aus der Beladungsposition, jeweils nach dem bevorzugten Ausführungsbeispiel der Erfindung in einer schematischperspektivischen Ansicht,
- Fig. 3: zeigt die Transportschale gemäß einer weiteren bevorzugten Ausführungsform in einer schematisch-perspektivischen Ansicht von unten, und
- Fig. 4: zeigt die Transportschale gemäß Fig. 1 mit darauf angeordneter Fixiereinrichtung in einer schematisch-perspektivischen Ansicht.

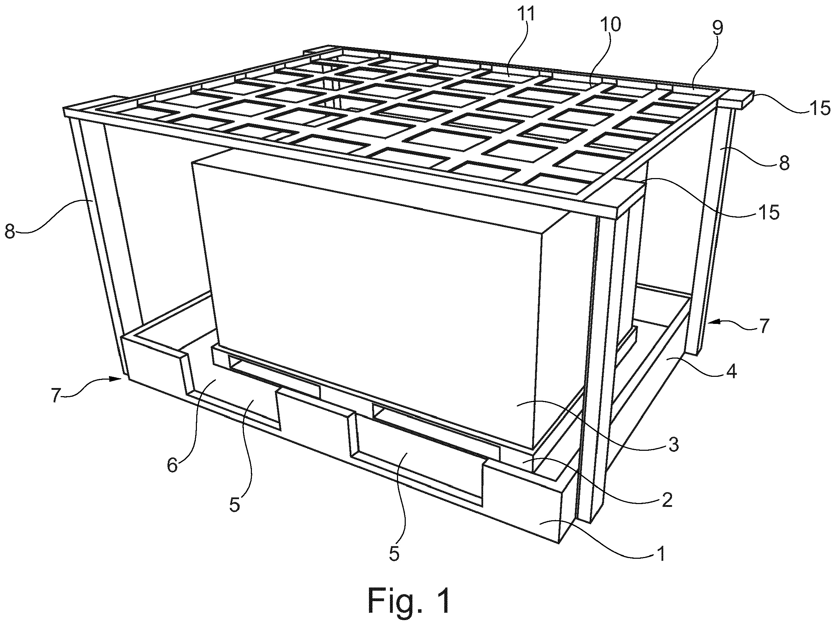

Fig. 1 zeigt eine Transportschale 1 mit darauf abgestellter Palette 2 gemäß einem bevorzugten Ausführungsbeispiel der Erfindung in einer schematisch-perspektivischen Ansicht. Die Palette 2 ist als Europoolpalette, auch Europalette genannt, nach der Norm EN13698-1 ausgestaltet und weist eine Grundfläche von 0,96m² und Maße von 1,2m x 0,8m in ihrer Länge und Breite bei einer Höhe von 14,4cm auf. Auf der Palette 2 ist eine Sendung 3 abgestellt, deren Grundfläche wenige Zentimeter kleiner als die Grundfläche der Palette 2 ist. Auf wenn Fig. 1 nur eine einzige Sendung 3 zeigt, ist es ebenso möglich und in der Regel auch vorgesehen, dass eine Vielzahl unterschiedlicher Sendungen 3 mit gegebenenfalls auch unterschiedlichen Maßen auf der Palette 2 abgestellt sind. Wenn auch nicht gezeigt kann die Sendung 3 direkt auf der Transportschale 1 abgestellt werden, was durch die nachfolgende Beschreibung ebenso mit umfasst ist.

Die Palette 2 mit der darauf angeordneten Sendung 3 wurde in einem vorherigen Schritt mittels eines Gabelstaplers von einem LKW an einem Paketzentrum entladen und in einem zweiten Schritt von dem Gabelstapler auf der Transportschale 1 in der in Fig. 1 gezeigten Position abgestellt. Die Transportschale 1 ist nach Art einer Bodenwanne mit einem umlaufenden Rand 4 aus Metall ausgeführt. An einer Vorderseite der Transportschale 1 sind in den Rand 4 zwei Aussparungen 5 für Gabelzinken des Gabelstaplers vorgesehen. Derart kann der Gabelstapler die Palette 2 über den Rand 4 herüber in horizontaler Richtung über der Transportschale 1 einführen, die Palette 2 auf der Transportschale 1 abstellen und danach die Gabelzinken durch die Aussparungen 5 hindurch herausziehen. Die Transportschale 1 weist eine viereckige Grundfläche 6 mit einem Innenmaß von 1,2m x 1,4m auf, wobei der Rand 4 sich entlang der Grundfläche 6 und senkrecht von der Grundfläche 6 weg um 15cm nach oben erstreckt.

An den Ecken 7 der Grundfläche 6 sind jeweils sich von der Grundfläche 6 senkrecht nach oben weg erstreckende metallische Teleskopstangen 8 vorgesehen. Die Teleskopstangen 8 sind in Fig. 1 in ihrer vollständig ausgezogenen Position gezeigt. Innerhalb der Teleskopstangen 8 ist jeweils eine Feder vorgesehen, die die Teleskopstange 8 in ihre eingezogene Position streben lässt. Während die Teleskopstangen 8 an ihrem unteren Ende mit der Transportschale 1 verbunden sind, sind die jeweilig oberen Enden mit einem rechteckigen Rahmen 9 aus einem metallischen Profil verbunden. An dem Rahmen 9 ist eine als Netz ausgestaltete Fixiereinrichtung 10 in periodischen Abständen befestigt, welche durch den Rahmen 9 umlaufend eingefasst wird.

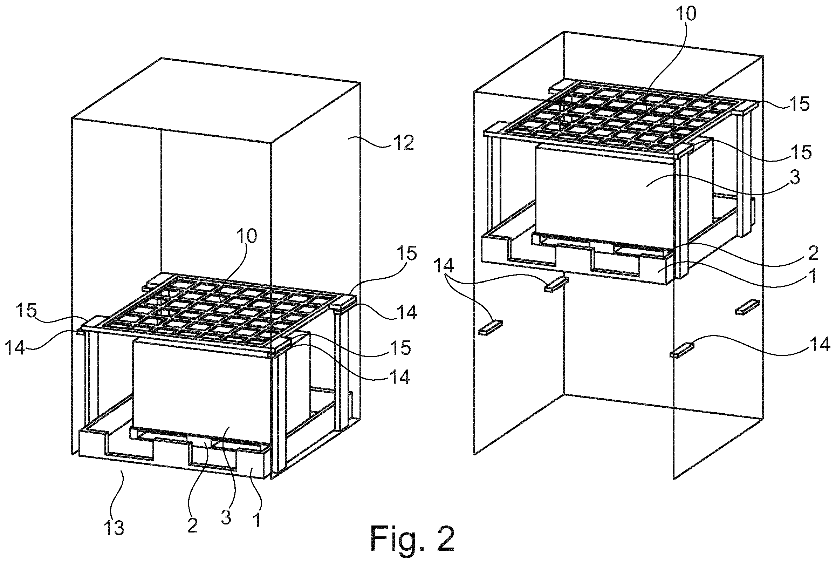

Fig. 2 zeigt die in Fig. 1 bereits dargestellte Transportschale 1 mit darauf angeordneter Palette 2 und Sendung 3 in einer als Lift ausgestalteten Anordnung 12. Mittels des Liftes ist die Transportschale 1 mit darauf angeordneter Palette 2 und Sendung 3 höhenveränderbar einerseits in eine in Fig. 2 links gezeigte Beladungsposition auf einen Boden 13 des Paketzentrums absenkbar und, wie rechts in Fig. 2 gezeigt, aus der Beladungsposition anhebbar. In der Beladungsposition ist die Fixiereinrichtung 10, wie auch in Fig. 1 gezeigt, beabstandet zu der Transportschale 1 in einer Halteposition angeordnet.

An einem seitlichen, horizontalen Profil der Anordnung 12 sind gegenüberliegend jeweils zwei Auflager 14 angeordnet, in die, wie links in Fig. 2 gezeigt, in einer Halteposition der Fixiereinrichtung 10 an dem Rahmen 9 korrespondierend vorgesehene Vorsprünge 15 formschlüssig eingreifen. Beim Absenken der Transportschale 1 aus der in Fig. 2 rechts gezeigten Position in die in Fig. 2 links gezeigte Beladungsposition verbleibt die Fixiereinrichtung 10 auf Höhe der Auflager 14 in der Halteposition, während die Transportschale 1 bis herunter auf den Boden 13 in die Beladungsposition absenkbar ist.

Sofern jedoch die Transportschale 1 aus der Beladungsposition hin zu der in Fig. 2 rechts gezeigten Position angehoben wird, verringert sich zunächst der Abstand zwischen der Fixiereinrichtung 10 und der Sendung 3, da sich die Teleskopstangen 8 verkürzen. Erst wenn, wie in Fig. 2 rechts gezeigt, die Fixiereinrichtung 10 berührend auf der Sendung 3 zu liegen kommt, verkürzen sich die Teleskopstangen 8 nicht weiter und die Fixiereinrichtung 10 verbleibt in einer Fixierposition relativ beabstandet zu der Transportschale 1.

Derart ist die Sendung 3 gegen Herunterfallen von der Palette 2 gesichert, einerseits während des Anhebens der Transportschale 1 in vertikaler Richtung sowie andererseits bei einem Bewegen der Transportschale 1 in horizontaler Richtung beispielsweise innerhalb des Paketzentrums hin zu einer Sortiereinrichtung oder dergleichen. Nachdem die Transportschale 1 mit der Sendung 3 an der Sortiereinrichtung eingetroffen ist, kann die Transportschale 1 in einer weiteren Anordnung 12 zum Entladen der Palette 2 abgesenkt werden.

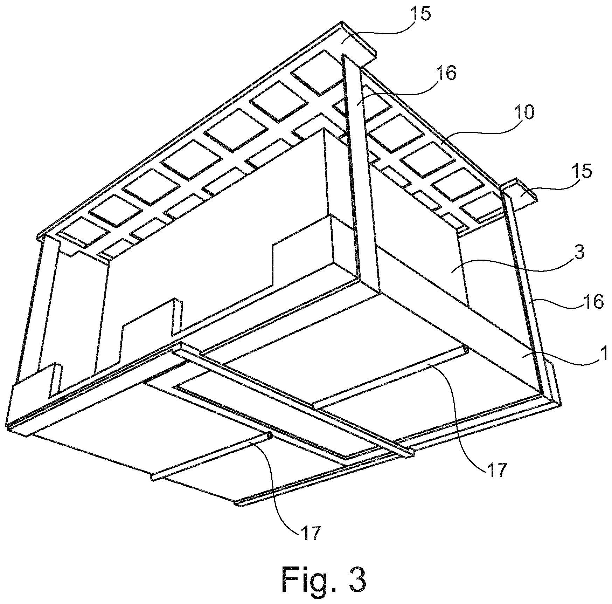

Fig. 3 zeigt eine Ausgestaltung der Transportschale 1 gemäß einem weiteren bevorzugten Ausführungsbeispiel der Erfindung in einer schematisch-perspektivischen Ansicht von unten. Anstelle der sich aufgrund der Feder selbst kontrahierenden Teleskopstangen 8 sind an den Ecken 7 der Fixiereinrichtung 10 bzw. des Rahmens 9 jeweils Seile 16 vorgesehen. Mit jeder Ecke 7 des Rahmens 16 ist ein Seil 16 verbunden, welches in Richtung Transportschale 1 verläuft. Die Seile 16 sind an der Transportschale 1 hin zu der Unterseite der Transportschale 1 umgelenkt und jeweils mit einem an der Unterseite angeordneten Federmittel 17 zum Kontrahieren des Seils 16 beim Anheben der Transportschale 1 verbunden.

Fig. 3 zeigt zunächst den nicht kontrahierten Zustand des Federmittels 17. Beim Anheben verkürzt sich der Abstand zwischen Transportschale 1 und Fixiereinrichtung 10, so dass sich das Federmittel 17 kontrahiert. In der Fixierposition liegt die als Netz ausgeführte Fixiereinrichtung 10 an der Sendung 3 an. Das Federmittel 17 verhindert, dass sich beim weiteren Anheben das Netz von der Sendung 3 löst und sichert derart die Sendung 3 gegen Herunterfallen oder Verrutschen.

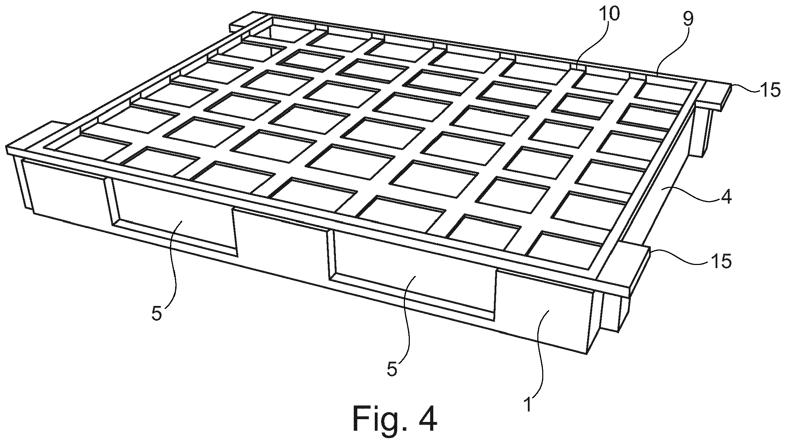

Fig. 4 zeigt schließlich eine Transportschale 1 ohne darauf angeordneter Palette 2 und ohne Sendung 3. Die Teleskopstangen 8 sind vollständig zusammengezogen, so dass die Fixiereinrichtung 10 berührend an dem Rand 4 der Transportschale 1 anliegt. Derart ist die Transportschale 1 besonders platzsparend lagerbar, wobei eine Mehrzahl Transportschalen 1 übereinander gelagert werden können.

**Bezugszeichenliste**

| | |
|---|---|
| Transportschale | 1 |
| Palette | 2 |
| Sendung | 3 |
| Rand | 4 |
| Aussparung | 5 |
| Grundfläche | 6 |
| Ecke | 7 |
| Teleskopstange | 8 |
| Rahmen | 9 |
| Fixiereinrichtung | 10 |
| Grundfläche | 11 |
| Anordnung | 12 |
| Boden | 13 |
| Auflager | 14 |
| Vorsprung | 15 |
| Seil | 16 |
| Federmittel | 17 |

## Patentansprüche

1. Anordnung (12) zum automatischen Sichern wenigstens einer Sendung (3) auf einer Transportschale (1), aufweisend eine Sendung (3) und eine Transportschale (1), auf der die Sendung (3) abstellbar ist, und eine Fixiereinrichtung (10) ausgestaltet zum Sichern der Sendung (3) an der Transportschale (1), wobei
zwischen der Fixiereinrichtung (10) und der Transportschale (1) eine Teleskopstange (8) und/oder ein Seil (16) vorgesehen ist,
die Fixiereinrichtung (10) einen umlaufenden Rahmen (9) aufweist,
an einem seitlichen, horizontalem Profil der Anordnung (12) gegenüberliegend jeweils zwei Auflager (14) angeordnet sind, in die in einer Halteposition der Fixiereinrichtung (10) an dem Rahmen (9) vorgesehene Vorsprünge (15) formschlüssig eingreifen und
die Anordnung (12) zum höhenverändernden Absenken und Anheben der Transportschale (1) derart ausgestaltet ist, dass durch Absenken der Transportschale (1) in eine Beladungsposition der Abstand zwischen der Fixiereinrichtung (10) und der Transportschale (1) derart vergrößert wird, dass in der Beladungsposition die Sendung (3) auf der Transportschale (1) zwischen derselben und der Fixiereinrichtung (10) abstellbar ist, und dass durch Anheben der Transportschale (1) aus der Beladungsposition der Abstand zwischen der Fixiereinrichtung (10) und der Transportschale (1) derart verringert wird, dass die Fixiereinrichtung (10) auf der Sendung (3) zum Sichern derselben gegen Herunterfallen von der Transportschale (1) zu liegen kommt.

2. Anordnung (12) nach dem vorhergehenden Anspruch, mit einer Palette (2) mit darauf angeordneter Sendung (3), wobei die Fixiereinrichtung (10) zum Sichern der Sendung (3) an der Palette (2) ausgestaltet ist, die Anordnung (12) derart ausgestaltet ist, dass in der Beladungsposition die Palette (2) mit darauf angeordneter Sendung (3) auf der Transportschale (1) zwischen derselben und der Fixiereinrichtung (10) abstellbar ist.

3. Anordnung (12) nach einem der vorhergehenden Ansprüche, wobei die Fixiereinrichtung (10) an der Transportschale (1) an einem Rand (4) derselben angeordnet ist.

4. Anordnung (12) nach einem der vorhergehenden Ansprüche, wobei sich die Fixiereinrichtung (10) in der Beladungsposition in einer Ebene parallel und beabstandet zur Transportschale (1) erstreckt.

5. Anordnung (12) nach einem der vorhergehenden Ansprüche, wobei die Fixiereinrichtung (10) als Seil, als Gummiseil, als Netz, als Gitter und/oder als Plane ausgebildet ist und/oder die Fixiereinrichtung (10) und die Transportschale (1) in der Größe ihrer Grundflächen (6, 11) zueinander korrespondieren.

6. Anordnung (12) nach einem der vorhergehenden Ansprüche, wobei die Transportschale (1) und die Fixiereinrichtung (10) jeweils eine rechteckartige und zueinander korrespondierende Grundfläche (6, 11) aufweisen und an jeder Ecke (7) eine Teleskopstange (8) vorgesehen ist, die sich jeweils senkrecht zu den Grundflächen (6, 11) und zwischen der Transportschale (1) und der Fixiereinrichtung (10) erstreckt.

7. Anordnung (12) nach einem der vorhergehenden Ansprüche, wobei zwischen der Fixiereinrichtung (10) und der Transportschale (1) ein Seil (16) vorgesehen ist, welches an der Transportschale (1) hin zu der Unterseite der Transportschale (1) umgelenkt ist und mit einem an der Unterseite angeordneten Federmittel (17) und/oder Gummiseil zum Kontrahieren des Seils (16) beim Anheben der Transportschale (1) verbunden ist.

8. Anordnung (12) nach einem der vorhergehenden Ansprüche, wobei die Anordnung (12) ausgestaltet ist, dass, wenn keine Sendung (3) oder, mit Anspruch 2, keine Palette (2) auf der Transportschale (1) abgestellt ist, durch Anheben der Transportschale (1) aus der Beladungsposition die Fixiereinrichtung (10) auf der Transportschale (1) zu liegen kommt.

9. Anordnung (12) nach einem der vorhergehenden Ansprüche, wobei die Transportschale (1) als Bodenwanne, als Ablagekasten, als Tray oder als Tablett mit einem teilweise umlaufenden Rand (4) ausgebildet ist und an dem Rand (4) zwei Aussparungen (5) für Gabelzinken vorgesehen sind, und/oder die Anordnung (12) als Lift, Hebebühne und/oder Transportbahn ausgeführt ist.

10. Anordnung (12) nach einem der vorhergehenden Ansprüche 2 bis 9, wobei die Palette (2) als Europoolpalette, als Industriepalette, als Großpalette oder als Gitterbox ausgestaltet ist und/oder die Transportschale (1) ein zu der Grundfläche der Palette (2) korrespondierendes oder überragendes Innenmaß aufweist.

11. Anordnung (12) nach einem der vorhergehenden Ansprüche, wobei der Abstand zwischen der Fixiereinrichtung (10) und der Transportschale (1) in der Beladungsposition 0,8m, Im oder 1,5m ist.

12. Anordnung (12) nach einem der vorhergehenden Ansprüche, wobei die Auflager (14), wenn die Transportschale (1) in der Beladungsposition ist, vertikal beabstandet zur Transportschale (1) derart angeordnet sind, dass beim Absenken der Transportschale (1) in Richtung Beladungsposition zunächst die Fixiereinrichtung (10) auf den Auflagern (14) derart zu liegen kommt, dass beim weiteren, darüber hinausgehenden Absenken die Fixiereinrichtung (10) in der durch die Auflager (14) vorgegebenen, vertikal beabstandeten Position verbleibt.

13. Anordnung (12) nach einem der vorhergehenden Ansprüche, wobei die Anordnung (12) ferner ausgestaltet ist, dass nach Abstellen der Sendung (3) oder, mit Anspruch 2, der Palette (2) auf der Transportschale (1) automatisch die Transportschale (1) angehoben wird.

14. Verfahren zum automatischen Sichern einer auf einer Palette angeordneten Sendung (3), mit einer Fixiereinrichtung (10) ausgestaltet zum Sichern der Sendung (3) an einer Transportschale (1), auf der die Sendung (3), abstellbar ist, und mit der Anordnung (12) nach einem der vorhergehenden Ansprüche, aufweisend die Schritte:
Absenken der Transportschale (1) in eine Beladungsposition, wodurch der Abstand zwischen der Fixiereinrichtung (10) und der Transportschale (1) derart vergrößert wird, dass in der Beladungsposition die Sendung (3) auf der Transportschale (1) zwischen derselben und der Fixiereinrichtung (10) abstellbar ist,
Abstellen der Sendung (3) auf der Transportschale (1), und
Anheben der Transportschale (1) aus der Beladungsposition, wodurch der Abstand zwischen der Fixiereinrichtung (10) und der Transportschale (1) derart verringert wird, dass die Fixiereinrichtung (10) auf der Sendung (3) zum Sichern derselben gegen Herunterfallen von der Transportschale (1) zu liegen kommt.

## Claims

1. Arrangement (12) for automatically securing at least one shipment (3) on a transport tray (1), comprising a shipment (3) and a transport tray (1) on which the shipment (3) is placeable, and a fixing means (10) configured for securing the shipment (3) at the transport tray (1), wherein
between the fixing means (10) and the transport tray (1) a telescopic rod (8) and/or a rope (16) is provided,
the fixing means (10) comprises a peripheral frame (9),
at a lateral, horizontal profile of the arrangement (12) two supports (14) are arranged opposite to each other into which projections (15) provided at the frame (9) engage in a form-fitting manner at a retaining position of the fixing means (10), and
the arrangement (12) for lowering and lifting and thus modifying the height of the transport tray (1) is configured such that by lowering the transport tray (1) into a loading position the distance between the fixing means (10) and the transport tray (1) is increased such that in the loading position the shipment (3) can be placed on the transport tray (1) between the same and the fixing means (10), and that by lifting the transport tray (1) from the loading position, the distance between the fixing means (10) and the transport tray (1) is reduced such that the fixing means (10) comes to rest on the shipment (3) for securing the same against falling off the transport tray (1).

2. Arrangement (12) according to claim 1, comprising a pallet (2) with a shipment (3) disposed thereon, wherein the fixing means (10) is configured for securing the shipment (3) at the pallet (2), the arrangement (12) is configured such that in the loading position the pallet (2) with the shipment (3) disposed thereon can be placed on the transport tray (1) between the same and the fixing means (10).

3. Arrangement (12) according to any one of the preceding claims, wherein the fixing means (10) is placed at the transport tray (1) at an edge (4) thereof.

4. Arrangement (12) according to any one of the preceding claims, wherein the fixing means (10) in the loading position extends in a plane parallel and spaced from the transport tray (1).

5. Arrangement (12) according to any one of the preceding claims, wherein the fixing means (10) is configured as a rope, as a rubber cord, as a net, as a grid and/or as a tarpaulin and/or the fixing means (10) and the transport tray (1) correspond to each other with respect to the size of their base areas (6, 11).

6. Arrangement (12) according to any one of the preceding claims, wherein the transport tray (1) and the fixing means (10) each have a rectangular and mutually corresponding base area (6, 11) and at each corner (7) a telescopic rod (8) is provided which extends respectively perpendicular to the base area (6, 11) and between the transport tray (1) and the fixing means (10).

7. Arrangement (12) according to any one of the preceding claims, wherein between the fixing means (10) and the transport tray (1) a rope (16) is provided, which is deflected at the transport tray (1) towards the bottom side of the transport tray (1) and is connected to a spring means (17) and/or a rubber cord provided at the bottom side for contracting the rope (16) when the transport tray (1) is lifted.

8. Arrangement (12) according to any one of the preceding claims, wherein the arrangement (12) is configured so that if no shipment (3) or, with claim 2, no pallet (2) is placed on the transport tray (1), the fixing means (10) comes to rest on the transport tray (1) by lifting the transport tray (1) from the loading position.

9. Arrangement (12) according to any one of the preceding claims, wherein the transport tray (1) is formed as a floor pan, as a storage box, as a tray or as a tablet with a partially circumferential edge (4), and at the edge (4) two recesses (5) for fork prongs are provided, and/or the arrangement (12) is configured as a lift, a lifting platform and/or a conveyor track.

10. Arrangement (12) according to any one of the preceding claims 2 to 9, wherein the pallet (2) is designed as an europallet, as an industrial pallet, as a large pallet or as a lattice box and/or the transport tray (1) has an inner dimension which corresponds to or exceeds the base area of the pallet (2).

11. Arrangement (12) according to any one of the preceding claims, wherein the distance between the fixing means (10) and the transport tray (1) in the loading position is 0.8 m, 1 m or 1.5 m.

12. Arrangement (12) according to any one of the preceding claims, wherein the supports (14), when the transport tray (1) is in the loading position, are vertically spaced from the transport tray (1) such that when lowering the transport tray (1) towards the loading position first the fixing means (10) comes to rest on the supports (14) so that in further lowering the fixing means (10) remains in the vertically spaced position which is predetermined by the supports (14).

13. Arrangement (12) according to any one of the preceding claims, wherein the arrangement (12) is further configured such that after placing the shipment (3) or, with claim 2, the pallet (2) on the transport tray (1) the transport tray (1) is automatically lifted.

14. Method for automatically securing a shipment (3) disposed on a pallet by use of a fixing means (10) configured to secure the shipment (3) at a transport tray (1) on which the shipment (3) can be placed, and by use of the arrangement (12) according to any one of the preceding claims, comprising the steps:
lowering the transport tray (1) into a loading position, whereby the distance between the fixing means (10) and the transport tray (1) is increased such that in the loading position the shipment (3) can be placed on the transport tray (1) between the same and the fixing means (10),
placing the shipment (3) on the transport tray (1), and
lifting the transport tray (1) from the loading position, whereby the distance between the fixing means (10) and the transport tray (1) is reduced so that the fixing means (10) comes to rest on the shipment (3) for securing the same against falling off the transport tray (1).

## Revendications

1. Agencement (12) permettant de fixer automatiquement au moins un article à envoyer (3) sur un contenant de transport (1), présentant un article à envoyer (3) et un contenant de transport (1), sur lequel on peut poser l'article à envoyer (3), et un dispositif de fixation (10) prévu pour la fixation de l'article à envoyer (3) sur le contenant de transport (1), où
une tige télescopique (8) et/ou une corde (16) sont prévues entre le dispositif de fixation (10) et le contenant de transport (1),
le dispositif de fixation (10) présente un cadre (9) circonférentiel,
deux supports (14) sont respectivement disposés en face d'un profilé latéral horizontal de l'agencement (12), dans lesquels des protubérances (15) prévues sur le cadre (9) se mettent en prise par complémentarité des formes dans une position de maintien du dispositif de fixation (10), et
l'agencement (12) est conçu de telle manière pour l'abaissement et le soulèvement par modification de la hauteur du contenant de transport (1) que, par un abaissement du contenant de transport (1) dans une position de chargement, la distance entre le dispositif de fixation (10) et le contenant de transport (1) est agrandie de telle manière que, dans la positon de chargement, l'article à envoyer (3) peut être posé sur le contenant de transport (1) entre ceux-ci et le dispositif de fixation (10) et que, par un soulèvement du contenant de transport (1) à partir de la position de chargement, la distance entre le dispositif de fixation (10) et le contenant de transport (1) diminue de telle manière que le dispositif de fixation (10) arrive à se coucher sur l'article à envoyer (3) pour la fixation de celui-ci vis à vis d'une chute à partir du contenant de transport (1).

2. Agencement (12) selon la revendication précédente, doté d'une palette (2) avec l'article à envoyer (3) étant disposé dessus, où le dispositif de fixation (10), pour la fixation de l'article à envoyer (3), est prévu sur la palette (2), l'agencement (12) est conçu de telle manière que, dans la position de chargement, la palette (2) avec l'article à envoyer (3) étant agencé dessus peut être posée sur le contenant de transport (1) entre celui-ci et le dispositif de fixation (10).

3. Agencement (12) selon l'une des revendications précédentes, dans lequel le dispositif de fixation (10) est disposé sur le contenant de transport (1) au niveau d'un bord (4) de celui-ci.

4. Agencement (12) selon l'une des revendications précédentes, dans lequel le dispositif de fixation (10) s'étend dans la position de chargement parallèlement à un plan et espacé par rapport au contenant de transport (1).

5. Agencement (12) selon l'une des revendications précédentes, dans lequel le dispositif de fixation (10) est conçu sous forme de corde, de corde en caoutchouc, sous forme de filet, sous forme de grille et/ou sous forme de plans et/ou le dispositif de fixation (10) et le contenant de transport (1) correspondent l'un à l'autre en ce qui concerne la dimension de leurs surfaces de base (6, 11).

6. Agencement (12) selon l'une des revendications précédentes, dans lequel le contenant de transport (1) et le dispositif de fixation (10) présentent une surface de base (6, 11) de type rectangulaire et correspondante l'une à l'autre et une tige télescopique (8) est prévue à chaque angle (7), qui s'étend respectivement verticalement par rapport aux surfaces de base (6, 11) et entre le contenant de transport (1) et le dispositif de fixation (10).

7. Agencement (12) selon l'une des revendications précédentes, dans lequel une corde (16) est prévue entre le dispositif de fixation (10) et le contenant de transport (1), laquelle est articulée sur le contenant de transport (1) vers le côté inférieur du contenant de transport (1) et est reliée avec un système de ressort (17) disposé sur le côté inférieur et/ou une corde en caoutchouc pour contracter la corde (16) lors du soulèvement du contenant de transport (1).

8. Agencement (12) selon l'une des revendications précédentes, dans lequel l'agencement (12) est conçu pour, lorsqu'aucun article à envoyer (3), ou avec la revendication 2, aucune palette (2), n'est posé sur le contenant de transport (1), que le dispositif de fixation (10) se trouve couché sur le contenant de transport (1) par un soulèvement du contenant de transport (1) à partir de la position de chargement.

9. Agencement (12) selon l'une des revendications précédentes, dans lequel le contenant de transport (1) est conçu sous forme de cuvette de sol, de boîte de dépôt sous forme de plateau ou sous forme de tablette avec un bord partiellement circonférentiel et que deux évidements (5) pour des dents de fourche sont prévus sur le bord (4), et/ou l'agencement (12) est conçu sous forme d'ascenseur, de rampe hydraulique et/ou de bande transporteuse.

10. Agencement (12) selon l'une des revendications précédentes, dans lequel la palette (2) est conçue sous forme de palette Europool, sous forme de palette d'industrie, sous forme de palette de grande dimension ou de caisse-palette, et/ou le contenant de transport (1) présente une dimension intérieure correspondant à la surface de base de la palette (2) ou dépassant pardessus.

11. Agencement (12) selon l'une des revendications précédentes, dans lequel la distance entre le dispositif de fixation (10) et le contenant de transport (1) dans la position de chargement est de 0,8 m, 1 m ou 1,5 m.

12. Agencement (12) selon l'une des revendications précédentes, dans lequel les supports (14), lorsque le contenant de transport (1) est dans la position de chargement, sont disposés espacés verticalement par rapport au contenant de transport (1) de telle manière que lors de l'abaissement du contenant de transport (1) en direction de la position de chargement, le dispositif de fixation est d'abord couché sur les supports (14) de telle manière que, lors de l'abaissement consécutif ayant lieu après, le dispositif de fixation (10) reste dans la position espacée prédéfinie, espacée verticalement par les supports (14).

13. Agencement (12) selon l'une des revendications précédentes, où l'agencement (12) est en outre conçu de sorte qu'après le dépôt de l'article à envoyer (3), ou avec la revendication 2, de la palette (2), sur le contenant de transport (1), le contenant de transport (1) est automatiquement soulevé.

14. Procédé de fixation automatique d'un article à envoyer (3) disposé sur une palette, avec un dispositif de fixation (10) pour la fixation de l'article à envoyer (3) sur un contenant de transport (1), sur lequel l'article à envoyer (3) peut être posé et avec l'agencement (12) selon l'une des revendications précédentes, présentant les étapes :
d'abaissement du contenant de transport (1) dans une position de charge, ce par quoi la distance entre le dispositif de fixation (10) et le contenant de transport (1) est agrandie de telle manière que l'article à envoyer (3) peut être posé sur le contenant de transport (1) entre celui-ci et le dispositif de fixation (10) dans la position de chargement,
de dépôt de l'article à envoyer sur le contenant de transport (1), et
de soulèvement du contenant de transport (1) à partir de la position de chargement, ce par quoi la distance entre le dispositif de fixation (10) et le contenant de transport (1) est diminuée de telle manière que le dispositif de fixation (10) arrive à se coucher sur l'article à envoyer (3) pour la fixation de celui-ci vis-à-vis d'une chute du contenant de transport (1).
